# EUROPEAN PATENT APPLICATION

(11) **EP 1 143 756 A1**
(43) Date of publication of application: **10.10.2001**
(21) Application number: 00970029.5
(22) Date of filing: 24.10.2000
(51) Int. Cl.: H04Q 7/38

(54) **MOBILE COMMUNICATION TERMINAL AND HANDOVER CONTROL METHOD**

(30) Priority: 27.10.1999 JP 30541999
(71) Applicant: MATSUSHITA ELECTRIC INDUSTRIAL CO., LTD., Kadoma-shi, Osaka 571-8501 (JP)
(72) Inventor: KANEMOTO, Hideki, Yokosuka-shi, Kanagawa 239-0847 (JP); KATO, Osamu, Yokosuka-shi, Kanagawa 237-0066 (JP)
(74) Representative: Grünecker, Kinkeldey, Stockmair & Schwanhäusser Anwaltssozietät
(86) International application number: JP0007422
(87) International publication number: WO0131961

(57) **Abstract**

A recording section 109 records a hand-over generation frequency at a predetermined interval according to the result of comparison selection operations in a selection section 108, a judgement section 110 compares the hand-over generation frequency and a predetermined threshold, and a measurement section 105 decreases a measurement frequency of the received quality of a control channel signal after the hand-over generation frequency is equal to or higher than the predetermined threshold. Moreover, the judgment section 110 controls a despreading section 103 for reception of a plurality of paging channel signals in the case of reduction in the measurement frequency.

## Description

### Technical Field

The present invention relates to a mobile communication terminal apparatus and a hand-over control method.

### Background Art

Hand-over, by which a mobile station observes control channel signals such as a perch channel signals at waiting time for anytime selection of a cell or a sector to which the above station is belonging, is called as idle hand-over. After the above idle hand-over, the above mobile station is put into a waiting state to accept outgoing calls of the own station and to receive paging channel signals for detection of incoming-calls to the own station. As described above, the above mobile station efficiently selects the cell or the sector, using the above waiting time, by performing the above idle hand-over.

In a conventional idle hand-over method, the above mobile station compares the received quality between a control channel signal transmitted from a base station in a cell to which the above mobile station is belonging, and a control channel signal transmitted from a base station in an adjacent cell and other cells, and performs hand-over so as to select a base station with better received quality. Moreover, the above mobile station performs in a similar manner hand-over between sectors by comparison of the received quality among control channel signals assigned to each sector.

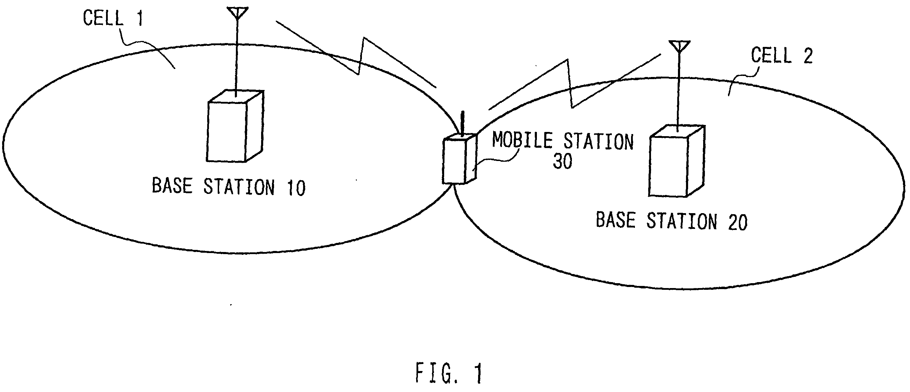

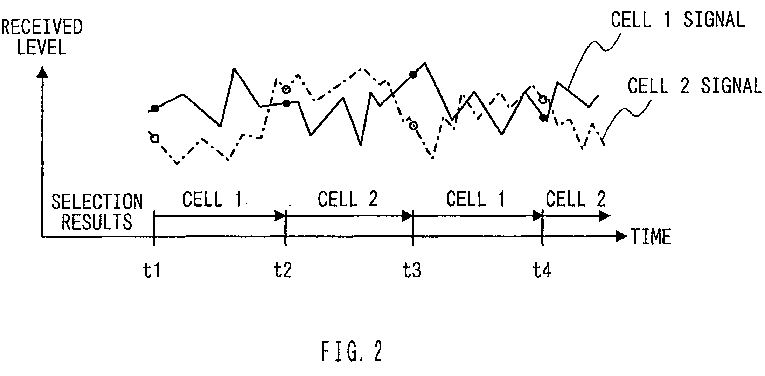

However, the above conventional idle hand-over method has the following problems. Hereinafter, the problems of the conventional idle hand-over method will be described, referring to FIG. 1 and FIG. 2. FIG. 1 is a conceptual diagram of cells in a radio communication system, and FIG. 2 is a diagram showing relations between fluctuation states of the received levels of control channel signals and selection states of cells in the conventional idle hand-over operation method.

In FIG. 1, a mobile station 30 is now located in the vicinity of the boundary between a cell 1 in which a base station 10 exists and a cell 2 in which a base station 20 exists. In such a case, the mobile station 30 may receive both of a control channel signal assigned to the cell 1 (hereinafter, called as "cell 1 signal") and that assigned to the cell 2 (hereinafter, called as "cell 2 signal").

In such a state, as the received levels of the both are comparable each other, there is small difference in the received quality at the mobile station 30 between communicating with the base station 10 and communicating with the base station 20. That is, the mobile station 30 has no special need for hand-over.

However, in such a state, which signal of the cell 1 signal and the cell 2 signal is received by the mobile station 30 at higher level is changed every moment due to fluctuated propagation environment and so on. Therefore, which cell of the cell 1 and the cell 2 is selected for the mobile station 30 is changed every moment.

Specifically, as the received level of the cell 1 signal and that of the cell 2 signal is comparable each other and there is small difference between them as shown in FIG. 2, a control channel signal with a higher received level is changed every moment at timing of t1 through t4 for reception and selection of control channel signals . Accordingly, a control channel signal and a cell to be selected for the mobile station 30 are also changed every moment at timing of t1 through t4. Thereby, there have occurred a problem that unnecessary hand-over operations are frequently performed to cause increased battery consumption at the mobile station 30.

Moreover, there has been another problem that the mobile station 30 performs useless operations, that is, receives a plurality of control channel signals, compares the received levels among them, and selects one cell at every timing of t1 through t4, though there is no special need for the hand-over.

Furthermore, there has been further another problem that there is an increased possibility of failed incoming-calls to cause reduction in an incoming-call success rate when hand-over is frequently generated, as the mobile station 30 has a need for switching of received paging channel signals for detection of incoming-calls from base stations at each selection of one cell.

### Disclosure of Invention

The object of the present invention is to provide a mobile communication terminal apparatus and a hand-over control method by which battery saving may be achieved by reduction in useless processing for hand-over control, and the frequency of unnecessary hand-over, and, at the same time, reduced incoming-call success rate may be prevented.

In order to achieve the above object, the present invention has a configuration that the frequency of selection operation of a cell or a sector by comparison of the received quality among a plurality of control signals such as perch channel signals (hereinafter, called as "comparison selection operation") is reduced, and, at the same time, a plurality of paging channel signals are received, when hand-over is generated at a frequency equal to or higher than a predetermined frequency.

### Brief Description of Drawings

FIG. 1 is a conceptual diagram of cells in a radio communication system.
FIG. 2 is a diagram showing relations between fluctuation states of the received levels of control channel signals and selection states of cells in a conventional idle hand-over method.
FIG. 3 is a principal block diagram showing a schematic configuration of a radio reception apparatus installed in a mobile communication terminal apparatus according to one embodiment of the present invention.
FIG. 4 is a flowchart for description of operations of the mobile communication terminal apparatus according to the above embodiment of the present invention.
FIG. 5 is a diagram showing relations between fluctuation states of the received SIRs of control channel signals and selection states of cells in a hand-over control method according to the above embodiment of the present invention.

### Best Mode for Carrying Out the invention

Hereinafter, one embodiment according to the present invention will be described in detail, referring to drawings.

### (Embodiment)

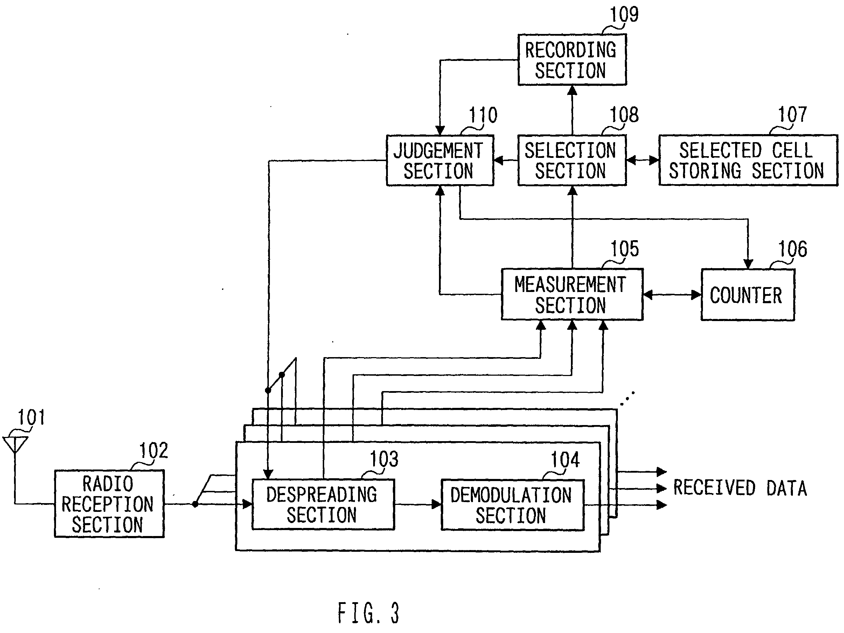

FIG. 3 is a principal block diagram showing a schematic configuration of a radio reception apparatus installed in a mobile communication terminal apparatus according to one embodiment of the present invention. Hereinafter, there are described a case where a received SIR (Signal to Interference Ratio) is used as one example of a value denoting the received quality. However, any value such as a received level may be used as a value denoting the received quality if it may denote the received quality.

In FIG. 3, a radio reception section 102 performs predetermined radio processing (down conversion, A/D conversion and so on) of signals received through an antenna 101. A plurality of despreading sections 103 are provided corresponding to each cell for despreading of the received signals with spread codes assigned to each cell. A demodulation section 104 performs predetermined demodulation processing of signals in a user data part. Thereby, received data may be obtained.

Here, a plurality of despreading sections 103 and demodulation sections 104 are provided, corresponding to each cell.

On the other hand, a measurement section 105 measures, at predetermined timing, received SIRs of control channel signals among despread received signals. And the measurement section 105 reduces the frequency of measurement of the received SIRs when hand-over is generated at a frequency equal to or higher than a predetermined frequency. Here, control channel signals are spread with spread codes assigned to each cell.

A counter 106 is a counter for counting a number of times of measurement timing during which measurement of the received SIRs of control channel signals is not performed, when the measurement section 105 does not measure the received SIRs of control channel signals for the measurement timing subsequent to the measurement timing at which hand-over is generated at a frequency equal to or higher than the predetermined frequency.

A selected cell storing section 107 stores information denoting the currently selected cell. Information denoting a cell is, for example, a unique number assigned to each cell, and so on. A selection section 108 selects a control channel signal with the maximum received SIR among measured received SIRs for selection of a cell, only when the received SIRs of control channel signals are measured in the measurement section 105.

A recording section 109 accumulates and records a number of changing times of cells to be selected, that is, a number of times for hand-over. And, the recording section 109 accumulates and records the number of selected times till the present time for each cell.

A judgement section 110 controls to reduce the frequency of comparison selection operations when the frequency of changing cells to be selected becomes equal to or higher than the predetermined frequency. Moreover, the judgement section 110 controls the despreading section 103 for reception of paging channel signals transmitted from a plurality of base stations in high order with regard to the number of selected times, when the frequency of changing cells to be selected becomes equal to or higher than the predetermined frequency. Here, the above paging channel signal is a control channel signal for a mobile station to detect incoming-calls to the own station.

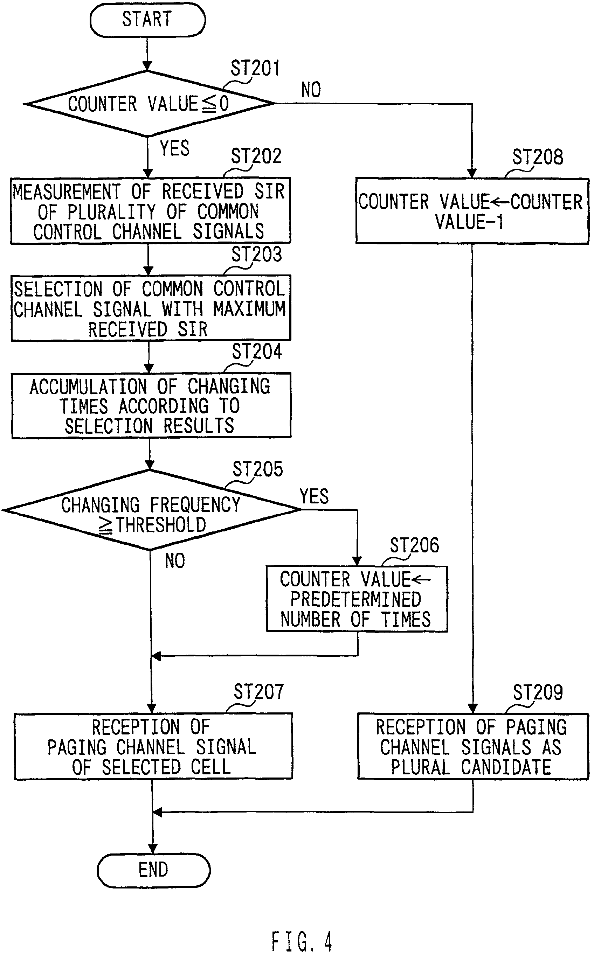

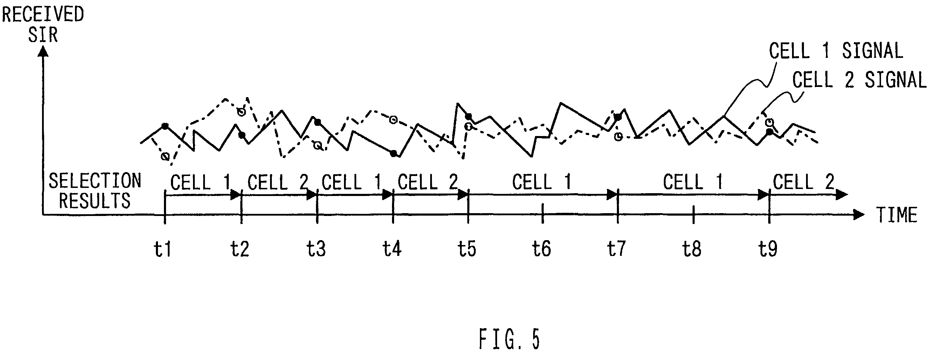

Now, operations for a mobile communication terminal apparatus with the above configuration will be described . FIG. 4 is a flowchart for description of operations of the mobile communication terminal apparatus according to the above embodiment of the present invention, and FIG. 5 a diagram showing relations between fluctuation states of the received SIRs of control channel signals and selection states of cells in a hand-over control method according to the above embodiment of the present invention.

A series of operations shown in the flow chart of FIG. 4 are performed respectively at predetermined timing of t1 through t9 as shown in FIG. 5. Hereinafter, it is assumed that a control channel signal assigned to the cell 1 is called as "cell 1 signal", and an assigned one to the cell 2 as "cell 2 signal".

In the first place, the measurement section 105 refers to a count value of the counter 106 at a step (hereinafter, shortened as "ST") 201. And, when the count value is "0", the measurement section 105 measures the received SIRs of a plurality of control channel signals for feeding of the measurement result to the selection section 108 at ST 202.

Subsequently, the selection section 108 selects at ST 203 a control channel signal with the maximum received SIR according to the measurement result at ST 202. That is, a cell as a hand-over end is selected. Then, the selection section 108 feeds information denoting the selected cell to the judgement section 110.

Thereafter, the selection section 108 increases by one the number of selected times for the selected-this-time cell among numbers of selected times recorded in the recording section 109 at ST 204. Moreover, the selection section 108 increases by one the number of changing times for the selected cell recorded in the recording section 109, when there is a difference in the case of comparison between the currently selected cell and the selected-this-time cell, referring to the selected cell storing section 107. And, at the same time, the information stored in the selected cell storing section 107 is updated according to the selection result by the selection section 108.

Subsequently, the judgement section 110 refers to the recording section 109, and calculates the changing frequency of the selected cell for comparison with the predetermined threshold at ST 205. Here, the changing frequency of the selected cell means how many times the selected cell has been changed during predetermined times of measuring timing till the present time, that is, a value denoting a ratio of the changed times to the above predetermined times. That is, the changing frequency of the selected cell is a value denoting a hand-over execution frequency during a predetermined interval. Now, the changing frequency of the selected cell is calculated as "0.5 (50%)", when hand-over is assumed to be executed, for example, two times among four times of measurement timing till the present time.

When the above changing frequency is equal to or higher than the predetermined threshold, the judgement section 110 sets a predetermined number of times in the counter 106 at ST 206. Here, the above predetermined number of times means a number of times of measuring timing during which the measurement section 105 does not measure the received SIRs of control channel signals, and a number of times of measuring timing during without measurement of the received SIRs of control channel signals may be adjusted in an arbitrary manner by properly changing the above predetermined number of times. Specifically, when the predetermined number of times is set as "1", the measurement of the received SIRs is performed at every other measurement timing after the timing at which the changing frequency is equal to or higher than the predetermined threshold. Accordingly, when the predetermined number of times is set as "1", the measurement frequency of the received SIRs may be reduced by half after the timing at which the changing frequency is equal to or higher than the predetermined threshold.

Then, the judgement 110 controls at ST 207 the despreading section 103 for reception of paging channel signals assigned to the selected cell according to information denoting the selected cell fed from the selection section 108. According to the above control, the despreading section 103 despreads the paging channel signals assigned to the selected cell for reception processing.

On the other hand, the measurement section 105 decreases a counter value of the counter 106 by one at ST 208, when the above counter value is not "0" at ST 201. Moreover, in such a case, the measurement section 105 does not measure the received SIRs of the control channel signals. Then, the measurement section 105 feeds to the judgement section 110 a signal for notification that the received SIRs are not measured.

The judgement section 110 refers to the recording section 109 at ST 209, when the judgement section 110 accepts the above notification that the received SIRs are not measured. Then, the judgement 110 controls the despreading section 103 for reception of paging channel signals assigned to a plurality of cells in high order with regard to the number of selected times . Accordingly, by the above control, the despreading section 103 despreads in parallel a plurality of paging channel signals transmitted from base stations with higher selection frequency, that is, base station reasonable as a selection candidate during timing at which the received SIRs are not measured, and performs reception processing. Here, a plurality of the paging channel signals may be received, and there is no special limit on the number if the number is not a single. The range in high order may be properly set.

Timing for comparison selection operation and selected cells after the above operations are shown in FIG. 5. Black spots show points of timing for measurement of the received SIR of the cell 1 signal, and white spots points of timing for measurement of the received SIR of the cell 2 signal in FIG. 5. Here, the mobile communication terminal apparatus is assumed to receive two control channel signals of the cell 1 signal and the cell 2 signal for convenient description.

Now, the counter value of the counter 106 is assumed to be "0" as an initial state. The cell 1 is selected at measurement timing t1, as the received SIR of the cell 1 signal is higher than that of the cell 2 signal. Similarly, the selected cells are changed at every measurement timing in the following way: the cell 2 is selected at measurement timing t2; the cell 1 at t3; the cell 2 at t4; and the cell 1 at t5.

Now, it is assumed, for example, that a predetermined threshold of the changing frequency is a threshold showing a changing frequency during four times of measurement timing till the present time, and is set as "1 (100%)". Here, the changing frequency becomes "1 (100%)", and becomes equal to or higher than the predetermined threshold at t5, as the selected cell is changed every time at four times of measurement timing of t2 through t5. Then, the predetermined number of times (now, set as "1" here), is set in the counter 106. Accordingly, measurement of received SIRs is performed at every other timing after the timing t5 at which the changing frequency is equal to or higher than the predetermined threshold. That is, the next measurement of the received SIR of the control channel signal is performed at timing t7. As described above, the frequency of comparison selection operations may be reduced by half after the timing t5 at which the changing frequency is equal to or higher than the predetermined threshold.

Subsequently, the mobile communication terminal apparatus receives in parallel two paging channel signals transmitted from two base stations existing in the cell 1 and in the cell 2 respectively, both of which have a high selection frequency, at timing t6 and t8 during which the measurement of the received SIR is not performed.

Thus, according to the mobile communication terminal apparatus and the hand-over control method of the present embodiment, the frequency of comparison selection operations may be decreased when the hand-over is generated at a frequency equal to or higher than the predetermined frequency. Thereby, the frequency of useless comparison selection operations and that of unnecessary hand-over operations may be reduced. Accordingly, battery saving may be achieved and, at the same time, the reduced incoming-call success rate due to frequent hand-over may be prevented.

Moreover, in the case of no comparison selection operations, the mobile communication terminal apparatus receives a plurality of paging channel signals. Therefore, the mobile communication terminal apparatus may surely perform incoming-calls even in the case of no comparison selection operations.

Furthermore, as control channel signals are individually assigned even to each sector, the mobile communication terminal apparatus according to the above embodiment may perform the hand-over control in a similar manner to the above one when the mobile communication terminal apparatus is located in the vicinity of the boundary between sectors.

Moreover, a plurality of despreading sections and demodulation sections have been provided for reception of a plurality of control channel signals and a plurality of paging channel signals in the mobile communication terminal apparatus according to the above embodiment. However, a plurality of control channel signals and a plurality of paging channel signals may be received by time sharing activation of one despreading section and one demodulation section.

Moreover, the mobile communication terminal apparatus and the hand-over control method according to the above embodiment may be also applied to idle hand-over operations. When applied, reduction in the frequency of useless comparison selection operations and for unnecessary hand-over may be realized at idle hand-over.

And, a radio reception apparatus may be made inactive to a sleeping state during no measurement of a received SIR of a control channel signal in the mobile communication terminal apparatus according to the above embodiment.

As described above, battery saving may be achieved by reduction in the frequency of useless processing at hand-over control and for unnecessary hand-over, and, at the same time, the reduced incoming-call success rate may be prevented, according to the present invention.

This application is based on the Japanese Patent Application No. HEI 11-305419, filed on Oct. 27, 1999, the entire contents of which are expressly incorporated herein by reference.

### Industrial Applicability

The present invention may be applicable to a mobile communication terminal apparatus used in a mobile communication system.

## Claims

1. A mobile communication terminal apparatus comprising:
a comparison selector for performing a comparison selection operation by which a control channel signal with the best received quality is selected after comparison of the received quality of a plurality of control channel signals; and
a measurer for measuring of a switching frequency of control channel signals at a predetermined interval, wherein
said comparison selector reduces the frequency of the comparison selection operations when the switching frequency is equal to or heigher than a predetermined threshold.

2. The mobile communication terminal apparatus according to claim 1, further comprising:
a receiver for receiving a plurality of control channel signals for detection of incoming-calls, when the frequency of the comparison selection operations is reduced.

3. The mobile communication terminal apparatus according to claim 2, further comprising:
a recorder for recording of selection times for each hand-over end according to a selection result, wherein
said receiver receives a plurality of control channel signals, which are assigned hand-over ends with higher selection frequency, for detection of incoming-calls.

4. The mobile communication terminal apparatus according to claim 1, wherein said mobile communication terminal apparatus is activated at waiting time.

5. A hand-over control method, wherein
a frequency of comparison selection operations for selection of a control channel signal with the best received quality among a plurality of control channel signals is reduced, when a frequency of hand-over operations which is generated during a predetermined interval is equal to or higher than a predetermined threshold.

6. The hand-over control method according to claim 5, wherein
a plurality of control channel signals for detection of incoming-calls are received in the case of reduction in the frequency of the comparison selection operations.
